# EUROPEAN PATENT SPECIFICATION

(11) **EP 3 971 035 B1**
(45) Date of publication and mention of the grant of the patent: **07.06.2023**
(21) Application number: 21197608.9
(22) Date of filing: 20.09.2021
(51) Int. Cl.: B60R 9/02, B60P 3/00

(54) **PALLET-CARRIER BOX WITH AN OPENING SYSTEM OF THE SLIDING TYPE**
PALETTENBOX MIT EINEM VERSCHIEBLICH GEFÜHRTEN ÖFFNUNGSYSTEM
CAISSE-PALETTE AVEC UN SYSTÈME D'OUVERTURE DE TYPE COULISSANT

(30) Priority: 22.09.2020 IT 202000022264
(43) Date of publication of application: 23.03.2022
(73) Proprietor: Daken S.p.A., 70126 Bari (IT)
(72) Inventor: PASCIUCCO, Domenico, I-75020 SCANZANO JONICO (Matera) (IT); CORRADO, Luca, I-70022 ALTAMURA (Bari) (IT); LORUSSO, Giuseppe, I-70022 ALTAMURA (Bari) (IT); GIACOMOBELLO, Paolo, I-70022 ALTAMURA (Bari) (IT)
(74) Representative: Savoca, Agatino

(56) References cited:
- DE-A1- 10 358 243
- DE-A1-102010 045 488
- FR-A1- 2 781 188

## Description

### Technical field

This invention is generally in the field of commercial automotive accessories; in particular, the invention relates to a pallet-carrier box with a sliding opening system.

### Prior art

DE 103 58 243 A1 discloses a pallet-carrier box, adapted to be mounted on the chassis of a commercial vehicle. The pallet-carrier box comprises a case, comprising a pair of upper and lower walls, lying on respective planes identified by a longitudinal direction and a transverse direction perpendicular to each other, said planes being mutually parallel and spaced along a vertical direction perpendicular to the first two, said case further comprising a pair of side walls, lying on respective planes identified by the longitudinal and vertical directions, said planes being mutually parallel and spaced apart along the transverse direction, said upper, lower and lateral walls identifying a compartment suitable for accommodating at least one pallet. The pallet-carrier box also comprises a pair of pins fixed to the side walls, slidable within the respective guides, and at least one lid, adapted to occlude an access section to the compartment along a plane identified by the transverse and vertical directions, said lid being movable between a closed condition, in which the lid closes the access section to the compartment, and an open condition, in which the lid is arranged parallel to a lower wall of the case. The pallet-carrier box further comprises a pair of guides, associated to the lid, and a pair of primary actuators, each having a first end hinged to a respective side wall, and the opposite end hinged to a respective pin, said primary actuators being suitable to give a thrust to the respective pins towards the position proximal to the access section to the compartment when the lid is in the closed condition, and a thrust to the respective pins towards the position distal from the access section to the compartment when the lid is in the open condition.

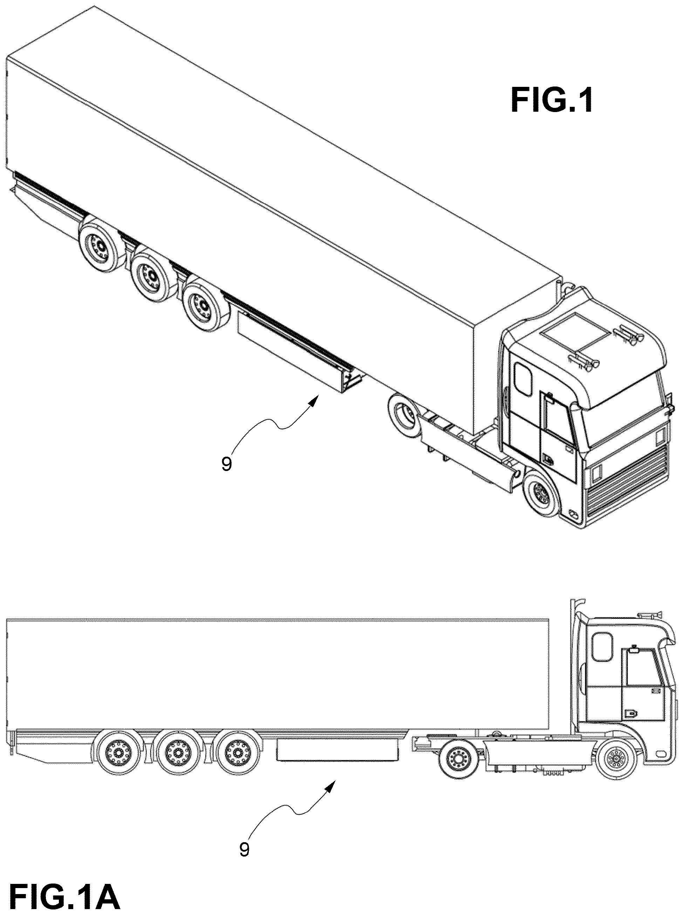

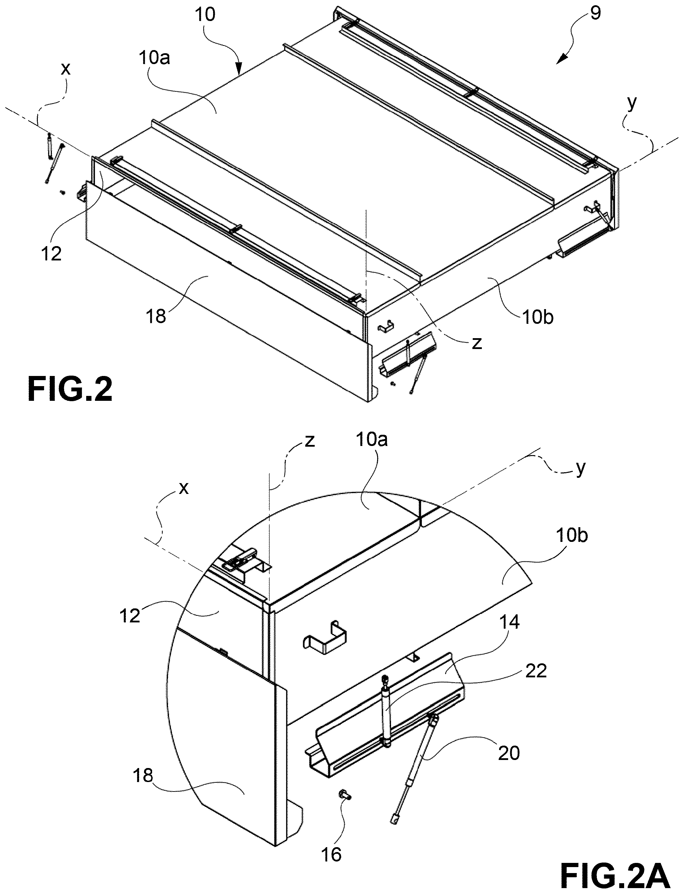

Pallet-carrier boxes are known to be configured to be mounted to the chassis of a commercial motor vehicle, typically underneath a trailer of a truck (as shown by way of example in Figs. 1 and 2).

One or more pallets are stored inside the pallet-carrier boxes, for example those left over after the vehicle load has been delivered, or intended for picking up goods and loading them onto the vehicle. In this way, pallets may be contained and transported tidily in a designated space.

Because they must accommodate a plurality of relatively bulky items, the boxes are large in size and weight, and include one or two lids, which occlude the interior compartment of the box from one or both sides accessible by the operator (i.e., the sides that face outward from the vehicle or trailer, when the box is mounted thereon).

The lids are simply hinged to a lower edge of the box so that they rotate downward under their own weight when the operator releases the lid from the box.

However, this admittedly rudimentary connection system has many drawbacks.

First of all, the opening (i.e., downward) rotation of the lid is uncontrolled, and since the weight of the lid is quite heavy, the opening movement may be unexpectedly rapid and cause structural damage to the components of the box or injury to the operator. Nor are the restraining means (typically, lanyards or chains) that are used to secure the top edge of the lid to the box sufficient, since they only have the function of stopping the lid from falling so that, as it rotates, it does not continue beyond a certain angle, but without offering any control or aid to the rotation movement.

In addition, when the operator lifts the lid to return it to the closed position, said lid risks bending and deforming due to its length if the operator does not manipulate it from the center, which may make the operation more inconvenient.

Such drawbacks, understandably, limit the usability and safety of the product.

### Summary of invention

An object of this invention is to overcome the aforementioned problems.

To achieve this, a pallet-carrier box according to this invention is provided with a tilting lid, the movement of which is controlled by means of actuators (active or passive) and possibly dampers.

The lid is hinged to pins sliding within guides extended along the direction of the depth of the case, so that the lid is accompanied by the pins and the guides to lie parallel to the top and bottom faces of the case.

Hinged to the pins are actuators (expediently, linear actuators of a passive type, such as gas springs), configured to slow the sliding of the pins at least partially during the first phase of motion of the lid (that of transitioning from the substantially rotational to the translational phase), and instead push the pins in the second phase (the substantially translational phase).

In this way, when for example the lid is hinged to the pins along an axis located near a lower edge of the lid (as in the example shown), the actuators (in combination with any auxiliary dampers, described more fully below) are configured in a first step to brake the fall of the lid under the action of its own weight, and in a second step to help to push it towards the horizontal position, all in an expediently automatic manner.

The aforesaid and other aims and advantages are achieved, according to one aspect of the invention, by a pallet-carrier box having the features defined in claim 1. Preferred embodiments of the invention are defined in the dependent claims.

### Brief description of the drawings

The functional and structural features of some preferred embodiments of a pallet-carrier box according to the invention will now be described. Reference is made to the appended drawings, wherein:
- Fig. 1 and 1A are respectively a schematic perspective and side views of a commercial motor vehicle having a trailer on which a pallet-carrier box is mounted, according to one embodiment of the invention;
- Fig. 2 and 2A are respectively an exploded schematic perspective view of a pallet-carrier box according to an embodiment of the invention, and a detail of Fig. 2;
- Fig. 3 through 3B are, respectively, a schematic perspective view of the pallet-carrier box in Fig. 2 in a closed configuration, a detail of Fig. 3 from a front view, and the detail of Fig. 3A from a rear view;
- Fig. 4 and 4A are, respectively, a schematic perspective view of the pallet-carrier box in Fig. 3 in a semi-open configuration, and a detail of Fig. 4; and
- Fig. 5 and 5A are, respectively, a schematic perspective view of the pallet-carrier box in Fig. 3 in the open configuration, and a detail of Fig. 5.

### Detailed description

Before describing a plurality of embodiments of the invention in detail, it should be clarified that the invention is not limited in its application to the construction details and configuration of the components presented in the following description or illustrated in the drawings. The invention may assume other embodiments and be implemented or constructed in practice in different ways. It should also be understood that the phraseology and terminology have a descriptive purpose and should not be construed as limiting.

Referring by way of example to the figures, a pallet-carrier box (9), suitable for being mounted on the chassis of a commercial motor vehicle, comprises a case 10, which in turn includes a pair of upper and lower walls 10a, lying on respective planes defined by a longitudinal direction y and a transverse direction x perpendicular to each other, said planes being mutually parallel and spaced along a vertical direction z perpendicular to the first two.

The case 10 further comprises a pair of side walls 10b, lying on respective planes defined by the longitudinal y and vertical z directions, such planes being parallel to each other and spaced along the transverse direction x.

The upper, lower, and side walls 10a, 10b define a compartment 12 adapted to accommodate at least one pallet. Preferably, the compartment 12 may be configured to accommodate at least one pallet sized according to the standards recognized in ISO 6780:2003 ("Flat pallets for intercontinental materials handling - Principal dimensions and tolerances," revised and confirmed in 2014), for example a European-type pallet (as per EUR/EPAL standard), and/or a US-type pallet (as per GMA standard), etc.

A pair of guides 14 are also provided, associated with respective side walls 10b and extending along the longitudinal direction y, as well as a pair of pins 16, sliding within respective guides 14.

The pallet-carrier box 9 comprises at least one lid 18, adapted to occlude an access section of the compartment 12 along a plane defined by the transverse x and vertical z directions.

The lid 18 is hinged to the pins 16 and is movable between a closed condition, in which the lid 18 occludes the access section of the compartment 12 and the pins are located in the guides 14 at a position proximal to said access section of the compartment 12, and an open condition, in which the lid 18 is arranged parallel to a lower wall 10a of the case 10, and the pins are located in the guides 14 at a position distal to said access section of the compartment 12.

There is also provided a pair of primary actuators 20, each having a first end hinged to a respective side wall 10b, and the opposite end hinged to a respective pin 16. Therefore, such primary actuators 20 are oscillatable about axes parallel to the transverse direction x.

Said primary actuators 20 are adapted to impart a thrust to the respective pins 16 toward the proximal position with respect to the access section of the compartment 12 when the lid 18 is in the closed condition, and a thrust to respective pins 16 toward the distal position relative to the access section of the compartment 12 when the lid 18 is in the open condition. In this manner, a controlled tilting motion is imparted to the lid 18 in the transition from the closed to the open condition, wherein the lid is induced to arrange itself to be parallel to the upper and lower walls 10a.

Expediently, each primary actuator 20 is hinged to the respective side wall 10b at a point along the longitudinal direction y between the proximal position and the distal position of the respective pin 16 with respect to the access section of the compartment 12.

With such a configuration, it is possible to make each primary actuator 20 oscillatable between an initial inclination, corresponding to the inclination that the primary actuator 20 assumes when the lid 18 is in the closed condition, a vertical condition, corresponding to the inclination that the primary actuator 20 assumes when the pin 16 is longitudinally located at the point at which said primary actuator 20 is hinged to the respective side wall 10b, and a final inclination, corresponding to the inclination that the primary actuator 20 assumes when the lid 18 is in the open condition. Expediently, the primary actuator 20 will therefore be configured to exert, in the stroke from its initial inclination to its vertical condition, a thrust on the pin 16 toward the position proximal to the access section of the compartment 12 whereby it slows the sliding of said pin 16 toward the position distal from the access section of the compartment 12, and is further configured to exert, in the stroke from its vertical condition to its final inclination, a thrust on the pin 16 toward the position distal to the access section of the compartment 12, whereby it accelerates the sliding of said pin 16 toward the position distal from the access section of the compartment 12.

According to an embodiment not shown, the primary actuators 20 may be of the active type, i.e., they may be linear actuators controlled (e.g., by an electronic control unit) to exert a controlled thrust on the pins 16.

Alternatively, the primary actuators 20 may be passive-type actuators. Preferably, such primary actuators 20 are conventional gas springs.

Preferably, the pallet-carrier box 9 further comprises a pair of auxiliary dampers 22 each having a first end hinged to a respective side wall 10b, and the opposite end hinged to the lid 18.

Said auxiliary dampers 22 are adapted to exert a damping action on the movement of the lid 18 in the transition thereof from the closed condition to the open condition, in particular in the first phase of rotation of the lid 18 around the pins 16.

Expediently, the first ends of the auxiliary dampers 22 are hinged to the side walls 10b at a position vertically intermediate between the top and bottom walls 10a of the case 10, and the other ends of the auxiliary dampers 22 are hinged to the lid 18 in proximity to the transverse edge thereof, opposite the edge proximal to the guides 14.

The auxiliary dampers 22 also act as a fulcrum for transferring the rotational motion of the lid 18 to the pins 16 whereby they slide in the guides 14, so as to transform the conventional rotational motion of the lid according to the prior art into a substantially swinging motion, in a suitably automatic manner.

The combined action of the primary actuators 20 and the auxiliary dampers 22 therefore allows the movement of the lid 18 to be controlled at each stage of opening, from a substantially rotational to a substantially translational movement, by accompanying the lid 18 until it moves from the vertical closed position to the horizontal open position.

Preferably, one or both of the auxiliary dampers 22 are conventional hydraulic dampers.

According to a preferred embodiment, the guides 14 are attached to the respective side walls 10b near the joining edge of said side walls 10b with the lower wall 10a, whereby the lid 18 is configured to move from the closed condition to the open condition under the action of its own weight (or, with minimal intervention by the operator, for example by means of an additional push or by holding the lid). Upon completion, the lid 18 will lay below the lower wall 10a of the case 10.

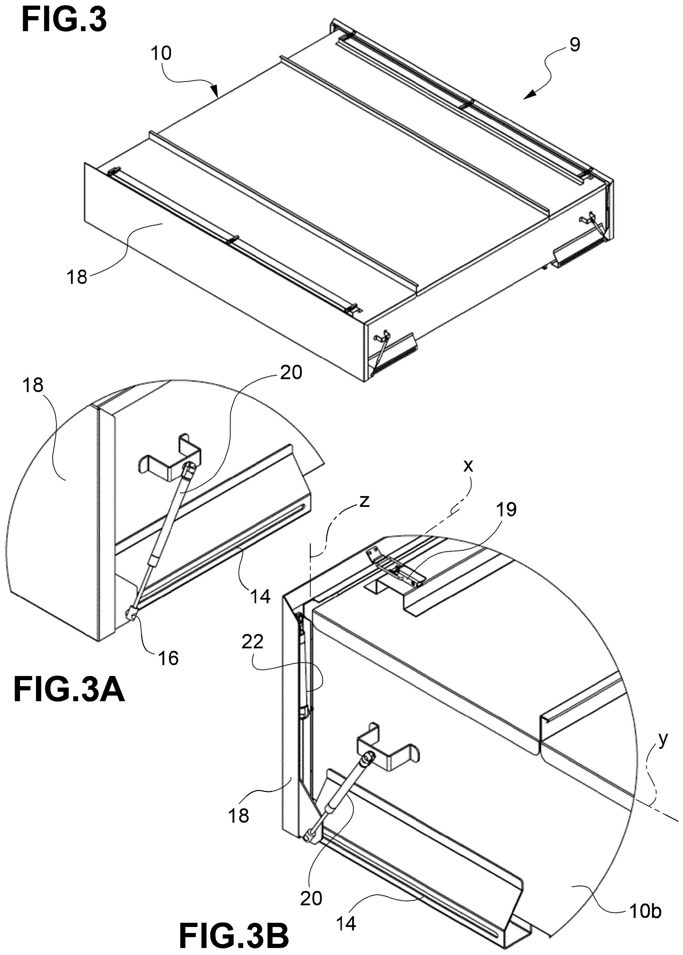

Said configuration is shown by way of example in Fig. 3 through 5A.

More specifically, Fig. 3, 3A and 3B show the lid 18 in the closed condition, wherein said lid 18 is arranged vertically. In the configuration illustrated in the aforesaid figures, the pins 16 are arranged in the guides 14 in a position proximal to the access section of the compartment 12, the primary actuators 20 are in their initial inclination (whereby they push the pins 16 to said position proximal to the access section of the compartment 12), and the auxiliary dampers 22 are in a vertical position (wherein they are substantially inactive).

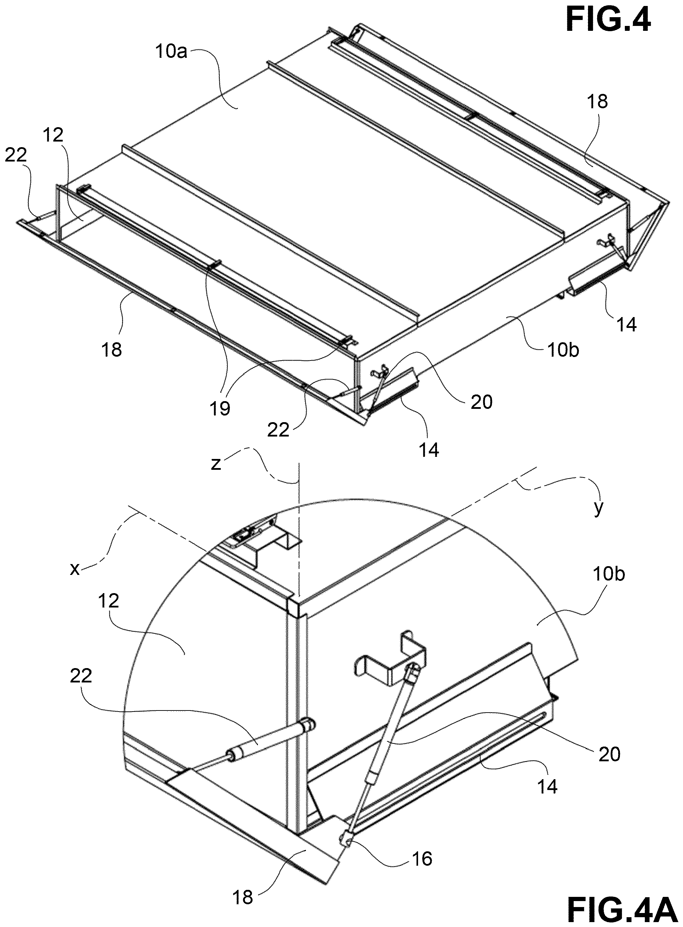

Fig. 4 and 4A, on the other hand, show the lid 18 in a transition condition between closed and open. In the configuration illustrated in the aforesaid figures, the downward rotation of the lid 18 is controlled by the auxiliary dampers 22, which, as they rotate, begin to direct the lid 18 to translate along the guides 14. The primary actuators 20 begin their angular stroke from the initial inclination toward the vertical condition.

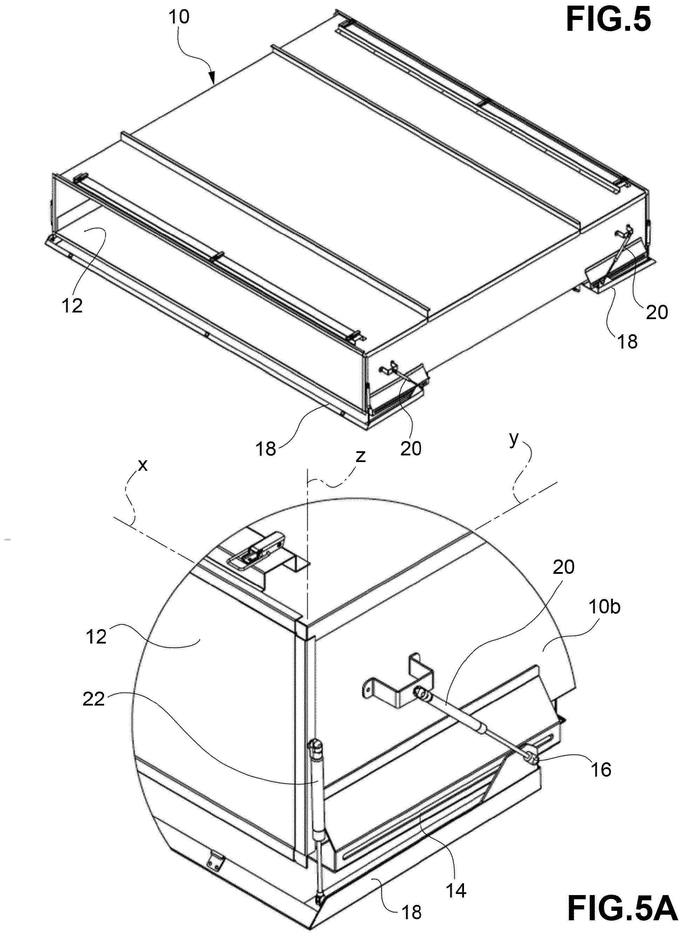

Fig. 5 and 5A, on the other hand, show the lid 18 in the open condition, wherein said lid 18 is arranged horizontally (and stowed under the lower portion 10a of the case 10). In the configuration illustrated in the aforesaid figures, the pins 16 are arranged in the guides 14 in a position distal to the access section of the compartment 12, the primary actuators 20 have transitioned to their final inclination, and the auxiliary dampers 22 have returned to a vertical position, but in the opposite direction to that in Fig. 3 (wherein they essentially perform a function of supporting the lid 18 in a horizontal position).

According to an alternative embodiment (not shown), the guides 14 are attached to respective side walls 10b near the joining edge of said side walls 10b with the upper wall 10a. In this case, in the open condition the lid 18 will be arranged above the upper wall 10a of the case 10. The operating principle of the opening system is substantially analogous to that described above in reference to the alternative embodiment, except that the weight of the lid 18 does not contribute to promoting the opening movement, which must therefore be imparted manually by the operator and/or in an assisted or automatic manner (by arranging, for example, actuators and/or active dampers).

The pallet-carrier box 9 may further comprise hooking means 19, which are known per se and adapted to releasably bind the lid 18 to the case 10 when the former is in the closed condition.

Expediently, the compartment 12 has a dimension equal to or greater than 800 mm along the longitudinal direction y, a dimension equal to or greater than 800 mm along the transverse direction x, and a dimension equal to or greater than 140 mm along the vertical direction z.

## Claims

1. A pallet-carrier box (9), adapted to be mounted on the chassis of a commercial vehicle, comprising:
- a case (10), comprising a pair of upper and lower walls (10a), lying on respective planes defined by a longitudinal direction (y) and a transverse direction (x) perpendicular to each other, said planes being mutually parallel and spaced along a vertical direction (z) perpendicular to the first two, said case (10) further comprising a pair of side walls (10b), lying on respective planes defined by the longitudinal (y) and vertical (z) directions, said planes being mutually parallel and spaced apart along the transverse direction (x), said upper, lower, and side walls (10a, 10b) defining a compartment (12) suitable for accommodating at least one pallet;
- a pair of guides (14), associated with respective side walls (10b) and extended along the longitudinal direction (y);
- a pair of pins (16), slidable within the respective guides (14);
- at least one lid (18), adapted to occlude an access section of the compartment (12) along a plane defined by the transverse (x) and vertical (z) directions, said lid (18) being hinged to the pins (16) and being movable between a closed condition, in which the lid (18) closes the access section to the compartment (12) and the pins are located in the guides (14) in a position proximal to said access section to the compartment (12), and an open condition, in which the lid (18) is arranged parallel to a lower wall (10a) of the case (10) and the pins are located in the guides (14) in a distal position with respect to said access section of the compartment (12); and
- a pair of primary actuators (20), each having a first end hinged to a respective side wall (10b), and the opposite end hinged to a respective pin (16), said primary actuators (20) being suitable to give a thrust to the respective pins (16) towards the position proximal to the access section of the compartment (12) when the lid (18) is in the closed condition, and a thrust to the respective pins (16) towards the position distal from the access section of the compartment (12) when the lid (18) is in the open condition.

2. The box according to claim 1, wherein each primary actuator (20) is hinged to the respective side wall (10b) at a point located along the longitudinal direction (y) between the proximal position and the distal position of the respective pin (16) with respect to the access section of the compartment (12).

3. The box according to claim 1 or 2, wherein one or both of the primary actuators (20) are gas springs.

4. The box according to any of the preceding claims, further comprising a pair of auxiliary dampers (22) each having a first end hinged to a respective side wall (10b), and the opposite end hinged to the lid (18), said auxiliary dampers (22) being adapted to exert a damping action on the motion of the lid (18) in the passage of the latter from the closed condition to the open condition.

5. The box according to claim 4, wherein one or both of the auxiliary dampers (22) are hydraulic dampers.

6. The box according to any of the preceding claims, wherein the guides (14) are fixed to the respective side walls (10b) in proximity to the joining edge of said side walls (10b) to the lower wall (10a), in such a way that the lid (18) is configured to pass from the closed condition to the open condition under the action of its own weight.

7. The box according to any of claims 1 to 5, wherein the guides (14) are fixed to the respective side walls (10b) in proximity to the joining edge of said side walls (10b) to the upper wall (10a).

8. The box according to any of claims 2 to 7, wherein the primary actuator (20) is oscillatable between an initial inclination, corresponding to the inclination that the primary actuator (20) assumes when the lid (18) is in the closed condition, a vertical condition, corresponding to the inclination that the primary actuator (20) assumes when the pin (16) is longitudinally at the point where said primary actuator (20) is hinged to the respective side wall (10b), and a final inclination, corresponding to the inclination that the primary actuator (20) assumes when the cover (18) is in the open condition, said primary actuator (20) being configured to exert, in the stroke from the initial inclination thereof to the vertical condition, a thrust on the pin (16) towards the position proximal to the access section of the compartment (12) so as to slow down the sliding of said pin (16) towards the position distal from the access section of the compartment (12), and being further configured to exert, in the stroke from the vertical condition thereof to the final inclination, a thrust on the pin (16) towards the position distal from the access section of the compartment (12) so as to accelerate the sliding of said pin (16) towards the position distal from the access section of the compartment (12).

9. The box according to any of the preceding claims, comprising hooking means (19), adapted to releasably fasten the lid (18) to the case (10) when the former is in the closed condition.

10. The box according to any of the preceding claims, wherein the compartment (12) has a dimension equal to or greater than 800 mm along the longitudinal direction (y), a dimension equal to or greater than 800 mm along the transverse direction (x), and a dimension equal to or greater than 140 mm along the vertical direction (z).

## Patentansprüche

1. Palettenträgerbox (9), die dazu angepasst ist, an dem Fahrgestell eines Nutzfahrzeugs montiert zu werden, mit:
- einem Gehäuse (10) mit einem Paar oberer und unterer Wände (10a), die auf jeweiligen Ebenen liegen, die durch eine Längsrichtung (y) und eine Querrichtung (x) senkrecht zueinander definiert sind und die gegenseitig parallel und entlang einer vertikalen Richtung (z) senkrecht zu den ersten zweien beabstandet sind, welches Gehäuse (10) ferner ein Paar Seitenwände (10b) aufweist, die auf jeweiligen Ebenen, die durch die Längs-(y) und die vertikale Richtung (z) definiert sind und die gegenseitig parallel und entlang der Querrichtung (x) beabstandet sind, welche oberen, unteren und Seitenwände (10a, 10b) ein Fach (12) definieren, das zum Aufnehmen mindestens einer Palette geeignet ist;
- einem Paar Führungen (14), die mit jeweiligen Seitenwänden (10b) assoziiert sind und sich entlang der Längsrichtung (y) erstrecken;
- einem Paar Stifte (16), die innerhalb der jeweiligen Führungen (14) gleitend verschiebbar sind;
- mindestens einem Deckel (18), der dazu angepasst ist, einen Zugangsabschnitt des Fachs (12) entlang einer Ebene, die durch die Quer-(x) und die vertikale (z) Richtung definiert ist, zu verdecken, welcher Deckel (18) an die Stifte (16) scharniert ist und zwischen einem geschlossenen Zustand, in dem der Deckel (18) den Zugangsabschnitt zu dem Fach (12) verschließt und die Stifte in den Führungen (14) in einer Position nahe an dem Zugangsabschnitt zu dem Fach (12) liegen, und einem offenen Zustand, in dem der Deckel (18) parallel zu einer unteren Wand (10a) des Gehäuses (10) angeordnet ist und die Stifte in den Führungen (14) in einer fernen Position in Bezug auf den Zugangsabschnitt des Fachs (12) liegen, bewegbar ist; und
- einem Paar primärer Aktuatoren (20), die jeweils ein erstes Ende, das an eine jeweilige Seitenwand (10b) scharniert ist, und das gegenüberliegende Ende, das an einen jeweiligen Stift (16) scharniert ist, aufweisen, welche primären Aktuatoren (20) dazu geeignet sind, einen Druck auf die jeweiligen Stifte (16) in Richtung der Position nahe an dem Zugangsabschnitt des Fachs (12), wenn der Deckel (18) in dem geschlossenen Zustand ist, und einen Druck auf die jeweiligen Stifte (16) in Richtung der Position fern von dem Zugangsabschnitt des Fachs (12), wenn der Deckel (18) in der offenen Position ist, zu geben.

2. Box nach Anspruch 1, bei der jeder primäre Aktuator (20) an die jeweilige Seitenwand (10b) an einem Punkt, der entlang der Längsrichtung (y) zwischen der nahen Position und der fernen Position des jeweiligen Stifts (16) in Bezug auf den Zugangsabschnitt des Fachs (12) liegt, scharniert ist.

3. Box nach Anspruch 1 oder 2, bei der einer oder beide der primären Aktuatoren (20) Gasfedern sind.

4. Box nach einem der vorhergehenden Ansprüche, ferner mit einem Paar Hilfsdämpfer (22), die jeweils ein erstes Ende, das an eine jeweilige Seitenwand (10b) scharniert ist, und das gegenüberliegende Ende, das an den Deckel (18) scharniert ist, aufweisen, welche Hilfsdämpfer (22) dazu angepasst sind, eine Dämpfungswirkung auf die Bewegung des Deckels (18) in der Passage des letzteren von dem geschlossenen Zustand zu dem offenen Zustand auszuüben.

5. Box nach Anspruch 4, bei der einer oder beide der Hilfsdämpfer (22) hydraulische Dämpfer sind.

6. Box nach einem der vorhergehenden Ansprüche, bei der die Führungen (14) an den jeweiligen Seitenwänden (10b) nahe an dem Verbindungsrand der Seitenwände (10b) mit der unteren Wand (10a) in einer derartigen Weise befestigt sind, dass der Deckel (18) dazu ausgebildet ist, unter der Wirkung seines eigenen Gewichts von dem geschlossenen Zustand zu dem offenen Zustand zu passieren.

7. Box nach einem der Ansprüche 1 bis 5, bei der die Führungen (14) an den jeweiligen Seitenwänden (10b) nahe an dem Verbindungsrand der Seitenwände (10b) mit der oberen Wand (10a) befestigt sind.

8. Box nach einem der Ansprüche 2 bis 7, bei der der primäre Aktuator (20) zwischen einer anfänglichen Neigung, die der Neigung, die der primäre Aktuator (20) annimmt, wenn der Deckel (18) in dem geschlossenen Zustand ist, entspricht, einem vertikalen Zustand, der der Neigung, die der primäre Aktuator (20) annimmt, wenn der Stift (16) längs an dem Punkt ist, wo der primäre Aktuator (20) an die jeweilige Seitenwand (10b) scharniert ist, entspricht, und einer abschließenden Neigung, die der Neigung, die der primäre Aktuator (20) annimmt, wenn der Deckel (18) in dem offenen Zustand ist, entspricht, pendelbar ist, welcher primäre Aktuator (20) dazu ausgebildet ist, bei dem Hub von der anfänglichen Neigung davon zu dem vertikalen Zustand einen Druck auf den Stift (16) in Richtung der Position nahe an dem Zugangsabschnitt des Fachs (12) auszuüben, so dass das Gleiten des Stifts (16) in Richtung der Position fern von dem Zugangsabschnitt des Fachs (12) verlangsamt wird, und ferner dazu ausgebildet ist, bei dem Hub von dem vertikalen Zustand davon zu der abschließenden Neigung einen Druck auf den Stift (16) in Richtung der Position fern von dem Zugangsabschnitt des Fachs (12) auszuüben, so dass das Gleiten des Stifts (16) in Richtung der Position fern von dem Zugangsabschnitt des Fachs (12) beschleunigt wird.

9. Box nach einem der vorhergehenden Ansprüche, mit Einhakungsmitteln (19), die dazu angepasst sind, den Deckel (18) lösbar an dem Gehäuse (10) zu befestigen, wenn der erstere in dem geschlossenen Zustand ist.

10. Box nach einem der vorhergehenden Ansprüche, bei der das Fach (12) eine Abmessung gleich oder größer als 800 mm entlang der Längsrichtung (y), eine Abmessung gleich oder größer als 800 mm entlang der Querrichtung (x) und eine Abmessung gleich oder größer als 140 mm entlang der vertikalen Richtung (z) aufweist.

## Revendications

1. Caisse-palette (9), apte à être montée sur le châssis d'un véhicule commercial, comprenant :
- un caisson (10), comprenant une paire de parois supérieure et inférieure (10a), disposées sur des plans respectifs définis par une direction longitudinale (y) et une direction transversale (x) perpendiculaires l'une à l'autre, lesdits plans étant mutuellement parallèles et espacés dans une direction verticale (z) perpendiculaire aux deux premières, ledit caisson (10) comprenant en outre une paire de parois latérales (10b), disposées sur des plans respectifs définis par les directions longitudinale (y) et verticale (z), lesdits plans étant mutuellement parallèles et espacés dans la direction transversale (x), lesdites parois supérieure, inférieure et latérales (10a, 10b) définissant un compartiment (12) approprié pour accueillir au moins une palette ;
- une paire de guides (14), associés à des parois latérales (10b) respectives et étendus dans la direction longitudinale (y) ;
- une paire de broches (16), pouvant coulisser à l'intérieur des guides (14) respectifs,
- au moins un couvercle (18), apte à occlure une section d'accès du compartiment (12) le long d'un plan défini par les directions transversale (x) et verticale (z), ledit couvercle (18) étant articulé aux broches (16) et étant mobile entre un état fermé dans lequel le couvercle (18) ferme la section d'accès au compartiment (12) et les broches sont situées dans les guides (14) à une position proximale de ladite section d'accès au compartiment (12), et un état ouvert dans lequel le couvercle (18) est agencé parallèlement à une paroi inférieure (10a) du caisson (10) et les broches sont situées dans les guides (14) à une position distale par rapport à ladite section d'accès du compartiment (12) ; et
- une paire d'actionneurs primaires (20), ayant chacun une première extrémité articulée à une paroi latérale (10b) respectives, et l'extrémité opposée articulée à une broche (16) respective, lesdits actionneurs primaires (20) étant appropriés pour donner une poussée aux broches (16) respectives vers la position proximale de la section d'accès du compartiment (12) lorsque le couvercle (18) est dans l'état fermé, et une poussée aux broches (16) respectives vers la position distale de la section d'accès du compartiment (12) lorsque le couvercle (18) est dans l'état ouvert.

2. Caisse-palette selon la revendication 1, chaque actionneur primaire (20) étant articulé à la paroi latérale (10b) respective à un point situé dans la direction longitudinale (y) entre la position proximale et la position distale de la broche (16) respective par rapport à la section d'accès du compartiment (12).

3. Caisse-palette selon la revendication 1 ou 2, l'un ou les deux des actionneurs primaires (20) étant des ressorts à gaz.

4. Caisse-palette selon l'une quelconque des revendications précédentes, comprenant en outre une paire d'amortisseurs auxiliaires (22) ayant chacun une première extrémité articulée à une paroi latérale (10b) respective, et l'extrémité opposée articulée au couvercle (18), lesdits amortisseurs auxiliaires (22) étant aptes à exercer une action d'amortissement sur le déplacement du couvercle (18) dans le passage de ce dernier de l'état fermé à l'état ouvert.

5. Caisse-palette selon la revendication 4, l'un ou les deux des amortisseurs auxiliaires (22) étant des amortisseurs hydrauliques.

6. Caisse-palette selon l'une quelconque des revendications précédentes, les guides (14) étant fixés aux parois latérales (10b) respectives à proximité du bord de jonction desdites parois latérales (10b) à la paroi inférieure (10a), de telle manière que le couvercle (18) soit configuré pour passer de l'état fermé à l'état ouvert sous l'effet de son propre poids.

7. Caisse-palette selon l'une quelconque des revendications 1 à 5, **dans laquelle** les guides (14) sont fixés aux parois latérales (10b) respectives à proximité du bord de jonctions desdites parois latérales (10b) à la paroi supérieure (10a).

8. Caisse-palette selon l'une quelconque des revendications 2 à 7, l'actionneur primaire (20) pouvant osciller entre une inclinaison initiale, correspondant à l'inclinaison que l'actionneur primaire (20) adopte lorsque le couvercle (18) est dans l'état fermé, un état vertical, correspondant à l'inclinaison que l'actionneur primaire (20) adopte lorsque la broche (16) est longitudinalement au point auquel ledit actionneur primaire (20) est articulé à la paroi latérale (10b) respective, et une inclinaison finale, correspondant à l'inclinaison que l'actionneur primaire (20) adopte lorsque le couvercle (18) est dans l'état ouvert, ledit actionneur primaire (20) étant configuré pour exercer, dans la course depuis l'inclinaison initiale de celui-ci jusqu'à l'état vertical, une poussée sur la broche (16) vers la position proximale de la section d'accès du compartiment (12) de manière à ralentir le coulissement de ladite broche (16) vers la position distale de la section d'accès du compartiment (12), et étant en outre configuré pour exercer, dans la course depuis l'état vertical de celui-ci jusqu'à l'inclinaison finale, une poussée sur la broche (16) vers la position distale de la section d'accès du compartiment (12) de manière à accélérer le coulissement de ladite broche (16) vers la position distale de la section d'accès du compartiment (12).

9. Caisse-palette selon l'une quelconque des revendications précédentes, comprenant des moyens d'accrochage (19), aptes à serrer, de manière libérable, le couvercle (18) sur le caisson (10) lorsque le couvercle est dans l'état fermé.

10. Caisse-palette selon l'une quelconque des revendications précédentes, le compartiment (12) ayant une dimension supérieure ou égale à 800 mm dans la direction longitudinale (y), une dimension supérieure ou égale à 800 mm dans la direction transversale (x), et une dimension supérieure ou égale à 140 mm dans la direction verticale (z).
